# EUROPEAN PATENT SPECIFICATION

(11) **EP 3 553 122 B1**
(45) Date of publication and mention of the grant of the patent: **05.05.2021**
(21) Application number: 17879138.0
(22) Date of filing: 02.06.2017
(51) Int. Cl.: C08K 5/20, C08L 23/06, C08F 10/02, C08J 5/00, B65D 41/00

(54) **POLYETHYLENE RESIN COMPOSITION FOR BOTTLE CAP AND MOLDED ARTICLE MADE THEREFROM**
POLYETHYLENHARZZUSAMMENSETZUNG FÜR FLASCHENKAPPE UND DARAUS HERGESTELLTER FORMARTIKEL
COMPOSITION DE RÉSINE DE POLYÉTHYLÈNE POUR BOUCHON DE BOUTEILLE ET ARTICLE MOULÉ FABRIQUÉ À PARTIR DE CELLE-CI

(30) Priority: 06.12.2016 KR 20160164950
(43) Date of publication of application: 16.10.2019
(73) Proprietor: Hanwha Total Petrochemical Co., Ltd., Seosan-si, Chungcheongnam-do 31900 (KR)
(72) Inventor: LEE, Young Sil, Seosan-si Chungcheongnam-do 31900 (KR); KIM, Dong Jin, Seosan-si Chungcheongnam-do 31900 (KR); PARK, Ji Yong, Seosan-si Chungcheongnam-do 31900 (KR)
(74) Representative: Pföstl, Andreas
(86) International application number: PCT/KR2017/005798
(87) International publication number: WO 2018/105829

(56) References cited:
- EP-A1- 3 448 926
- WO-A1-2015/165768
- WO-A1-2016/165773
- CN-A- 103 627 061
- GB-A- 2 386 374
- JP-A- 2003 535 155
- US-B1- 6 287 705
- DATABASE WPI Week 200516 Thomson Scientific, London, GB; AN 2005-148665 XP002798911, & KR 2004 0089204 A (SAMSUNG TOTAL PETROCHEMICALS CO LTD) 21 October 2004 (2004-10-21)
- UL prospector: "Incroslip C Slip Agent / Lubricant / Mold Release / Processing Aid Additive", Croda polymer additives , 19 September 2016 (2016-09-19), page 1, XP002798912, Retrieved from the Internet: URL:https://materials.ulprospector.com/en/ profile/odm?tds&docid=207537 [retrieved on 2020-05-05]
- STRUBE A. et al.: "Characterization and Identification of a Plastic-like Off-odor in Mineral Water", Water Science and Technology: Water Supply, vol. 9, no. 3, 2009, pages 299-309, XP055491223, DOI: doi:10.2166/ws.2009.382

## Description

### [Technical Field]

The present invention relates to a polyethylene resin composition for a bottle cap and a molded article made therefrom.

### [Background Art]

Along with recent trends toward diversification packing containers and widespread acceptance of separate collection of garbage from an environment perspective, plastic materials in making a bottle cap for a beverage container, such as a glass bottle or a polyethylene terephthate (PET) bottle, is increasingly used. Specifically, high-density polyethylene, polypropylene, and so on, are generally being used as plastic bottle cap materials, and bottle caps made from such plastic bottle cap materials are increasingly used because the plastic bottle caps are lighter, corrosion-free and excellent in view of formability and molding diversity, compared to conventional aluminum bottle caps. In particular, since high-density polyethylene is more flexible than polypropylene, it is possible to keep the contents of a beverage container in a securely sealed state even without using a separate liner for a bottle cap.

In general, if an opening torque that is required to open a bottle cap to drink beverage by rotating the bottom cap, is excessively high, the elderly and the weak or children may not be able to open the bottle cap, and if the opening torque is too low, the bottle cap may become loose, which is problematic in view of storage of bottle contents. Therefore, a plastic bottle cap is designed to have an appropriate opening torque. The closing or opening torque is mainly associated with friction between a mouth and a cap of, for example, a glass bottle or a PET container. In this regard, there are several conventional associated techniques, including U.S. Patent No. 4,710,409 disclosing a method of reducing an opening torque by adding an excessive oil-based lubricating agent to reduce friction of a bottle cap, and U.S. Patent Nos. 4,463,116 and 4,256,234 disclosing container closure techniques in which fatty acid amide is added to a liner material for sealing a bottle cap.

In the disclosed conventional techniques, however, since a low-molecular weight lubricating agent, such as oil or fatty acid amide, which is not compatible with a polyethylene or polypropylene resin composition, is added to the composition, a low-molecular weight material contained in the lubricating agent may leach to a surface of the bottle cap, thereby undesirably triggering a deterioration in the taste of contents. Accordingly, the use of the low-molecular weight lubricating agent is currently being restricted. Since beverages, particularly such as juices or ion drinks, need to be sterilized at a high temperature of approximately 90°C, the low-molecular weight lubricating agent having a low melting point of 70 °C to 80°C may be dissolved in beverage contents.

In addition, since the fatty acid amide functions as an odor triggering factor in a polyethylene resin, the intrinsic odor of a beverage may be altered and offensive odors may be produced in a worse case in which fatty acid amide is transferred to the beverage. Specifically, bottled natural water should be maintained in tasteless and odorless states. However, situations that trivial amounts of odor triggering materials remain in a PET container or a polyethylene bottle cap are constantly occurring. There have been several attempts to cope with such situations, including U.S. Patent No. 6,846,863 disclosing a process of adding fatty acid amide to a resin composition for a plastic bottle cap to suppress a bad odor caused from unsaturated fatty acid amide, which may, however, undesirably increase the friction coefficient of the plastic bottle cap.

### [Technical Problems to be Solved]

The present invention has been made in an effort to solve the problems of the prior art, and it is an object of the present invention to provide a polyethylene resin composition for a bottle cap, which can minimize the triggering of unpleasant odors and has an excellent slip property, and an molded article made therefrom.

### [Technical Solutions]

In accordance with an aspect of the present invention, the above and other objects can be accomplished by providing a polyethylene resin composition for a bottle cap, comprising 0.01 to 0.4 parts by weight of a slip agent relative to 100 parts by weight of a polyethylene resin, wherein the slip agent is an unsaturated fatty acid amide with an acid value of 0.01 to 0.1 mg KOH / g, an iodine value of 74 to 80 gl₂ / 100 g, and an amide purity of 99 to 100%.

In accordance with another aspect of the present invention, the above and other objects can be accomplished by providing a molded article made from the polyethylene resin composition.

### [Advantageous Effects]

As described above, since the polyethylene resin composition for a plastic bottle cap according to the present invention has a low coefficient of friction, the molded article made therefrom demonstrates an excellent slip property. In addition, since the polyethylene resin composition exhibits a low bad odor characteristic due to low odor and taste scores, intrinsic odor characteristics of beverages can be maintained by applying the polyethylene resin composition to a beverage bottle cap.

### [Description of the Invention]

Hereinafter, the present invention will be described in more detail.

The present invention relates to a polyethylene resin composition for a bottle cap, which has an excellent slip property by minimizing triggering of unpleasant odors and reducing the static friction coefficient thereof, and the polyethylene resin composition comprises 0.01 to 0.4 parts by weight of a slip agent relative to 100 parts by weight of a polyethylene resin, wherein the slip agent is an unsaturated fatty acid amide with an acid value of 0.01 to 0.1 mg KOH / g, an iodine value of 74 to 80 gl₂ / 100 g, and an amide purity of 99 to 100.

In the present invention, the polyethylene resin is high-density polyethylene that is a copolymer of an ethylene homopolymer and a monomer, and examples of suitable monomers preferably include, for example, linear olefin having 4 to 6 carbon atoms, such as butene-1 or hexane-1.

In the present invention, the slip agent is preferably unsaturated fatty acid amide having a carbon number of 16 to 25. The slip agent may be contained in an amount of 0.01 to 0.4 parts by weight, preferably 0.05 to 0.2 parts by weight, relative to 100 parts by weight of the polyethylene resin.

If the amount of the slip agent is less than 0.01 parts by weight, the coefficient of friction of the bottle cap may be increased, making the bottle cap not readily opened. If the amount of the slip agent is greater than 0.04 parts by weight, the contents stored in the bottle may not be properly sealed.

The slip agent is prepared in the following manner. That is to say, a reverse hydrogenation reaction of unsaturated fatty acid amide and alcohol is carried out in the presence of a nickel or copper-chromium catalyst to produce unsaturated ester or triglyceride and water, a hydrogenation reaction is then carried out, and these reactions are repeatedly performed, thereby removing peroxide, aldehyde, ketone and other odor triggering impurities. Thereafter, the odor triggering impurities are further removed by allowing the resulting material to pass through a chromatography column filled with an absorbent, thereby preparing the slip agent.

The absorbent used in preparing the slip agent may include silica gel, activated aluminum, magnesium silicate, activated clay, and so on.

The absorbent used in preparing the slip agent may be unsaturated fatty acid amide having an acid value of 0.01 to 0.1 mg KOH/g, an iodine value of 74 to 80 g I₂/100 g, an amide purity of 99 to 100 % and a carbon number of 16 to 25.

In the present invention, the polyethylene resin composition preferably has odor and taste scores of 2.0 or less and a static friction coefficient of 0.25 or less.

If the odor and taste scores of the polyethylene resin composition are greater than 2.0, unpleasant odors are generated, making it impossible for the polyethylene resin composition to be suitably used for making a bottle cap.

In addition, if the static friction coefficient is greater than 0.25, the bottle cap may not be properly opened or closed.

In the present invention, the polyethylene resin composition has a melt index (MI) in the range of 0.5 to 30 g/10 minutes, preferably 1 to 10 g/10 minutes, as measured at a temperature of 190°C and a load of 2.16 kg according to ASTM D1238.

If the MI is less than 0.5 g/10 minutes, the flowability may be lowered, making it difficult to mold a bottle cap. If the MI is greater than 30 g/10 minutes, the environmental stress crack resistance (ESCR) may be lowered, deteriorating long-term storage stability of the bottle cap.

In the present invention, the polyethylene resin composition may have a density in the range of 0.945 to 0.965 g/cm³, preferably 0.950 to 0.960 g/cm³, as measured at a temperature of 23°C according to ASTM D1505.

If the density is less than 0.945 g/cm³, the flexural strength may be lowered, deteriorating sealability of the bottle cap. If the density is greater than 0.965g/cm³, the ESCR may be lowered, deteriorating long-term storage stability of the bottle cap.

In the present invention, the polyethylene resin composition may further include at least one selected from the group consisting of 0.01 to 0.5 parts by weight, preferably 0.05 to 0.2 parts by weight, of an antioxidant and 0.01 to 0.3 parts by weight, preferably 0.05 to 0.2 parts by weight, of a neutralizer, relative to 100 parts by weight of the polyethylene resin.

If the amount of the antioxidant is less than 0.01 parts by weight, discoloration may occur during storage and a change in the viscosity may be created during processing. If the amount of the antioxidant is greater than 0.5 parts by weight, the taste or odor may be degenerated.

If the amount of the neutralizer is less than 0.01 parts by weight, discoloration and a viscosity change may occur during processing. If the amount of the neutralizer is greater than 0.3 parts by weight, physical properties, including color, strength, and so on, may be degenerated during long-term storage.

Representative examples of the antioxidant may include 1,3,5-trimethyl-2,4,6-tris(3,5-di-tert-butyl-4-hydroxybenzyl)benzene, 1,6-bis[3-(3,5-di-tert-butyl-4-hydroxyphenyl)propionamido]hexane, 1,6-bis[3-(3,5-d i-tert-butyl-4-hydroxyphenyl)propionamido]propane, tetrakis[methylene(3,5-di-tert-butyl-4-hydroxyhydrocinnamate)]methane, bis(2,6-di-tert-butyl-4-methyl phenyl)pentaerythritol-di-phosphite, bis(2,4-di-tert-butylphenyl)pentraerythritol-di-phosphite, and so on.

Representative examples of the neutralizer may include calcium stearic acid, zinc stearic acid, magnesium aluminum hydroxy carbonate, zinc oxide, magnesium hydroxy stearic acid or mixtures thereof.

According to the present invention, the thus manufactured polyethylene resin composition can be used in general bottle cap molding processes, such as compression molding or injection molding, In addition, according to the present invention, the molded article made from the polyethylene resin composition can be provided.

The bottle cap made from the polyethylene resin composition can maintain a beverage at an appropriate state without causing odor and taste alterations by minimizing triggering of unpleasant odors while having an excellent slip property.

### [Modes for Carrying Out the Invention]

The polyethylene resin composition for a bottle cap manufactured according to the present invention has odor and taste scores (indexes) of 2.0 or less to minimize triggering of unpleasant odors and a static friction coefficient of 0.25 or less to demonstrate an excellent slip property. Various physical properties of the polyethylene resin composition, including, odor and taste scores, static friction coefficients, and so on, are measured in the following manner.

### Acid value

The acid value indicates the number of milligrams of potassium hydroxide (KOH) of required for neutralizing each 1 g of fatty acid.

### Iodine value

After fatty acid is dissolved in carbon tetrachloride, a known concentration of potassium iodine is added to the resulting solution by a titration method, and 0.1 mol/L of sodium thiosulfate is then added thereto at each dose. The amount of iodine absorbed by 100 grams of fatty acid is calculated with the volume of sodium thiosulfate.

### Amide purity

After amine is dissolved in an alcohol solvent, the resulting solution is titrated with a known concentration of acid and the mass percentage is then calculated with the molecular weight of amine (15g/mol).

### Sensory tests of organoleptic properties

### Odor score

A glass 1L three-necked flask was filled with 50 g of pellet-type (or cap-molded) polyethylene resin composition and 500 ml natural water, followed by sealing. The composition sample was allowed to stand in a weatherometer with a UV wavelength of 340 nm and a light strength of 0.25 w/m² at 43°C for 72 hours, and then taken out from the tester to then be cooled at room temperature for 2 hours. The flask containing the resulting sample was shaken by hand 3 to 5 times and then unsealed to smell the composition for comparison with a blank sample (which was prepared under the same conditions with the composition sample). Odor intensities are scored by numbers as per the criteria listed in Table 1. Odor appraisers are 8 in total and average scores for the odor intensities assessed by the appraisers become result values. Subjects of the odor appraisers are chosen from people without having a smoke and beverage and food intakes within 2 hours and without drinking and using cosmetics within 24 hours, among those having experienced the sensory tests more than 10 times.

### Taste score

The samples were prepared in the same manner as in the odor score appraisal. A three-necked flask having completed a cooling process at room temperature for 2 hours was shaken by hand 3 to 5 times, and the pellet-type (or cap-molded) polyethylene composition contained in the flask, except for water, was thrown away. Taste appraisers first rinsed their mouths with natural water 3 to 5 times and then kept the water in the flask in their mouths for taste appraisal. Taste appraisers are 3 in total. Subjects of the taste appraisers are chosen from people without having a smoke and beverage and food intakes within 2 hours and without drinking and using cosmetics within 24 hours, among those having experienced the taste score tests more than 10 times.

**Table 1**

| Odor/taste index | Appraisal criteria |
|---|---|
| 1 | Indistinguishably similar odor (taste) to blank sample |
| 2 | Insignificantly sensed odor (taste) |
| 3 | Unpleasant odor (taste) |
| 4 | Rancid odor (taste) |
| 5 | Offensive odor (taste) |

### Static Friction Coefficient

2 mm thick injection-molded test pieces were manufactured and the static friction coefficients were measured according to ASTM D3428.

### Melt Index (MI)

The melt index (MI) was measured at a temperature of 190°C with a load of 2.16 kg according to ASTM D1238.

### Melt Flow Rate Ratio (MFRR)

The melt flow rate ratio (MFRR) was calculated by MI_{21.6} (as measured under conditions of 190°C in temperature and 21.6 kg in load)/MI_{2.16} (as measured under conditions of 190°C in temperature and 2.16 kg in load).

### Density

The density was measured at a temperature of 23°C according to ASTM D1505.

Hereinafter, the present invention will be described in more detail through the following Examples and Comparative Examples such that those can easily be embodied by one skilled in the art, but the following Examples are only illustrative and not intended to limit the invention thereto.

### Preparation of slip agents

A reverse hydrogenation reaction of unsaturated fatty acid amide and alcohol was carried out in the presence of a nickel or copper-chromium catalyst to produce unsaturated ester or triglyceride and water, and a hydrogenation reaction was carried out, and the reactions were repeatedly performed, thereby removing peroxide, aldehyde, ketone and other odor triggering impurities. Thereafter, the odor triggering impurities were secondarily removed by allowing the resulting material to pass through a chromatography column filled with an absorbent, yielding unsaturated fatty acid amide having an acid value of 0.01 to 0.1 mg KOH/g, an iodine value of 74 to 80 g I₂/100 g, an amide purity of 99 to 100 % and a carbon number of 16 to 25.

The absorbent used in the process of preparing the slip agent includes silica gel, activated aluminum, magnesium silicate, activated clay, and so on.

### Slip agents

### 1) Slip agent A

The slip agent A is 13-cis-docosenamide (erucamide), which was subjected to purification, thereby minimizing odor triggering materials contained therein. The slip agent A had an acid value of 0.05 mg KOH/g, an iodine value of 75 g I₂/100g, and an amide purity of 99.9% and was used in Examples 1, 2 and 3.

### 2) Slip agent B

The slip agent B is octadecanamide (stearmide), which was subjected to purification, thereby minimizing odor triggering materials contained therein. The slip agent B had an acid value of 0.05 mg KOH/g, an iodine value of 76 g I₂/100g, and an amide purity of 99.8% and was used in Comparative Example 1.

### 3) Slip agent C

The slip agent C is docosanamide (behenamide), which was subjected to purification, thereby minimizing odor triggering materials contained therein. The slip agent C had an acid value of 0.06 mg KOH/g, an iodine value of 77 g I₂/100g, and an amide purity of 99.7% and was used in Comparative Example 2.

### 4) Slip agent D

The slip agent D is 13-cis-docosenamide (erucamide), which was subjected to purification, thereby minimizing odor triggering materials contained therein. The slip agent D had an acid value of 1.53 mg KOH/g, an iodine value of 74 g I₂/100g, and an amide purity of 99.6% and was used in Comparative Example 3.

### 5) Slip agent E

The slip agent E is 13-cis-docosenamide (erucamide), which was subjected to purification, thereby minimizing odor triggering materials contained therein. The slip agent E had an acid value of 0.06 mg KOH/g, an iodine value of 85 g I₂/100g, and an amide purity of 99.8% and was used in Comparative Example 4.

### 6) Slip agent F

The slip agent F is 13-cis-docosenamide (erucamide), which was subjected to purification, thereby minimizing odor triggering materials contained therein. The slip agent F had an acid value of 0.05 mg KOH/g, an iodine value of 76 g I₂/100g, and an amide purity of 97.4% and was used in Comparative Example 5.

**Table 2**

| | Unit | A | B | C | D | E | F |
|---|---|---|---|---|---|---|---|
| Acid value | mg KOH/g | 0.05 | 0.05 | 0.06 | 1.53 | 0.06 | 0.05 |
| Iodine value | g I₂/100g | 75 | 76 | 77 | 74 | 85 | 76 |
| Amide purity | % | 99.9 | 99.8 | 99.7 | 99.6 | 99.8 | 97.4 |

### Example 1

100 parts by weight of high-density polyethylene powder prepared in a gaseous phase fluidized-bed reactor, the high-density polyethylene powder having a melt index of 4.0 g/10 minutes and a density of 0.954 g/cm³, which is commercially available in the trade name of C912A manufactured by Hanwha-Total Petrochemical Co., Ltd., Korea, was mixed with 0.015 parts by weight of Songnox-1010, 0.09 parts by weight of Irgafos-168, 0.1 parts by weight of calcium stearate, and 0.1 parts by weight of unsaturated fatty acid amide as the slip agent A listed in Table 2 using a Henschel mixer, followed by being processed by a two-screw extruder at 200°C to prepare a pellet-type composition. The appraisal result showed that the composition had a static friction coefficient of 0.25, an odor score of 1.1 and a taste score of 1.2.

### Example 2

The polyethylene resin composition was manufactured in the same manner as in Example 1, except that the slip agent A listed in Table 2 was added as unsaturated fatty acid amide in an amount of 0.15 parts by weight. The appraisal result showed that the composition had a static friction coefficient of 0.21, an odor score of 1.3 and a taste score of 1.5, confirming that the
composition had higher static friction coefficient and odor and taste scores than the polyethylene resin compositions manufactured in Comparative Examples 3 and 4 in which erucamide slip agents D and E were used in equal amounts, respectively.

### Example 3

The polyethylene resin composition was manufactured in the same manner as in Example 1, except that the slip agent A listed in Table 2 was added as unsaturated fatty acid amide in an amount of 0.2 parts by weight. The appraisal result showed that the composition had a static friction coefficient of 0.15, an odor score of 1.8 and a taste score of 1.7, confirming that the composition had higher static friction coefficient and odor and taste scores than the polyethylene resin composition manufactured in Comparative Example 5 in which erucamide slip agent F was used in an equal amount.

### Comparative Example 1

The polyethylene resin composition was manufactured in the same manner as in Example 1, except that the slip agent B listed in Table 2 was added as saturated fatty acid amide in an amount of 0.15 parts by weight. The appraisal result showed that the composition had a static friction coefficient of 0.34, an odor score of 1.4 and a taste score of 1.5, confirming that the composition had odor and taste scores substantially equal to those of the polyethylene resin composition manufactured in Example 2 in which an equal amount of the slip agent was used and a higher static friction coefficient than in Example 2. The result values are much higher than those of Example 1 in which the slip agent was used in a smaller amount than in Comparative Example 1.

### Comparative Example 2

The polyethylene resin composition was manufactured in the same manner as in Example 1, except that the slip agent C listed in Table 2 was added as saturated fatty acid amide in an amount of 0.2 parts by weight. When compared to Example 3 in which the slip agent was used in an equal amount, the polyethylene resin composition had substantially equal odor and taste scores and a higher static friction coefficient. The result values are substantially equal to those of Example 1 in which the slip agent was used about half of the amount used in Comparative Example 2.

### Comparative Example 3

The polyethylene resin composition was manufactured in the same manner as in Example 1, except that the slip agent D listed in Table 2 was added as unsaturated fatty acid amide in an amount of 0.15 parts by weight. The appraisal result showed that the polyethylene resin composition had an odor score of 2.8 and a taste score of 2.7, which are higher than those of Examples 1 to 3.

### Comparative Example 4

The polyethylene resin composition was manufactured in the same manner as in Example 1, except that the slip agent E listed in Table 2 was added as unsaturated fatty acid amide in an amount of 0.15 parts by weight. The appraisal result showed that the polyethylene resin composition had odor and taste scores of 2.5, which are higher than those of Examples 1 to 3.

### Comparative Example 5

The polyethylene resin composition was manufactured in the same manner as in Example 1, except that the slip agent F listed in Table 2 was added as unsaturated fatty acid amide in an amount of 0.2 parts by weight. The appraisal result showed that the polyethylene resin composition had odor and taste scores of 3.3 and 3.6, respectively, which are higher than those of Examples 1 to 3.

**Table 3**

| | | Unit | Example | | | Comparative Example | | | | |
|---|---|---|---|---|---|---|---|---|---|---|
| | | | 1 | 2 | 3 | 1 | 2 | 3 | 4 | 5 |
| Physical property | MI | g/10 min | 4.0 | 3.8 | 4.0 | 4.0 | 3.9 | 3.8 | 4.1 | 4.0 |
| | MFRR | | 28 | 29 | 29 | 28 | 28 | 29 | 29 | 30 |
| | Density | g/cm³ | 0.954 | 0.955 | 0.954 | 0.954 | 0.955 | 0.954 | 0.954 | 0.955 |
| Slip agent | Type | | A | A | A | B | C | D | E | F |
| | Content | parts by weight | 0.1 | 0.15 | 0.2 | 0.15 | 0.2 | 0.15 | 0.15 | 0.2 |
| Friction | Static friction coefficient | | 0.25 | 0.21 | 0.15 | 0.34 | 0.27 | 0.20 | 0.21 | 0.14 |
| Sensory test | Odor | Score | 1.1 | 1.3 | 1.8 | 1.4 | 1.7 | 2.8 | 2.5 | 3.3 |
| | Taste | Score | 1.2 | 1.5 | 1.7 | 1.5 | 1.7 | 2.7 | 2.5 | 3.6 |

As listed in Table 3, in Examples 1 to 3 in each of which the composition includes unsaturated fatty acid amide as the slip agent A having an acid value of 0.01 to 0.1 mg KOH/g, an iodine value of 74 to 80 g I₂/100g, and an amide purity of 99 to 100, the slip agent had a better static friction coefficient than in Comparative Examples 1 and 2 in which the compositions include fatty acid amides as the slip agents B and C.

In addition, in Comparative Examples 3, 4 and 5 in which the compositions includes the slip agent D having an acid value deviating from the claimed range, the slip agent E having an iodine value deviating from the claimed range, and the slip agent F having an amide purity deviating from the claimed range, respectively, the compositions of Comparative Examples 3, 4 and 5 showed undesired levels of odor and taste scores.

Therefore, the polyethylene resin composition for a bottle cap according to the present invention has odor and taste scores of 2.0 or less, thereby minimizing triggering of unpleasant odors, and a static friction coefficient of 0.25 or less, thereby demonstrating an excellent slip property.

### [Industrial Applicability]

The polyethylene resin composition for a plastic bottle cap of the present invention has a low friction coefficient to allow a molded article made therefrom to exhibit a good slip property, and low odor and taste scores to demonstrate low-odor characteristics. Therefore, when the polyethylene resin composition is applied to a bottle cap of a beverage, it is possible to maintain intrinsic odor characteristics of the beverage.

## Claims

1. A polyethylene resin composition for a bottle cap, comprising 0.01 to 0.4 parts by weight of a slip agent relative to 100 parts by weight of a polyethylene resin, wherein the slip agent is an unsaturated fatty acid amide with an acid value of 0.01 to 0.1 mgKOH / g, an iodine value of 74 to 80 gl₂ / 100 g, and an amide purity of 99 to 100%.

2. The polyethylene resin composition of claim 1, wherein the unsaturated fatty acid amide has a carbon number of 16 to 25.

3. The polyethylene resin composition of claim 1, wherein the polyethylene resin composition has a melt index in the range of 0.5 to 30 g/10 minutes, as measured at a temperature of 190°C and a load of 2.16 kg according to ASTM D1238.

4. The polyethylene resin composition of claim 1, wherein the polyethylene resin composition has a density in the range of 0.945 to 0.965 g/cm³, as measured at a temperature of 23°C according to ASTM D1505.

5. The polyethylene resin composition of claim 1, further comprising at least one selected from the group consisting of 0.01 to 0.5 parts by weight of an antioxidant and 0.01 to 0.3 parts by weight of a neutralizer, relative to 100 parts by weight of the polyethylene resin.

6. A molded article made from the polyethylene resin composition of any one of claims 1 to 5.

## Patentansprüche

1. Polyethylenharzzusammensetzung für einen Flaschenverschluss, umfassend 0,01 bis 0,4 Gewichtsteile eines Gleitmittels, bezogen auf 100 Gewichtsteile eines Polyethylenharzes, wobei das Gleitmittel ein ungesättigtes Fettsäureamid mit einer Säurezahl von 0,01 bis 0,1 mgKOH/g, einer Jodzahl von 74 bis 80 gI₂/100 g und einer Amidreinheit von 99 bis 100% ist.

2. Polyethylenharzzusammensetzung nach Anspruch 1, wobei das ungesättigte Fettsäureamid eine Kohlenstoffzahl von 16 bis 25 aufweist.

3. Polyethylenharzzusammensetzung nach Anspruch 1, wobei die Polyethylenharzzusammensetzung einen Schmelzindex im Bereich von 0,5 bis 30 g/10 Minuten aufweist, gemessen entsprechend ASTM D1238 bei einer Temperatur von 190°C und einer Last von 2,16 kg.

4. Polyethylenharzzusammensetzung nach Anspruch 1, wobei die Polyethylenharzzusammensetzung eine Dichte im Bereich von 0,945 bis 0,965 g/cm³ aufweist, gemessen entsprechend ASTM D1505 bei einer Temperatur von 23°C.

5. Polyethylenharzzusammensetzung nach Anspruch 1, ferner umfassend mindestens eines, ausgewählt aus der Gruppe, bestehend aus 0,01 bis 0,5 Gewichtsteilen eines Antioxidationsmittels und 0,01 bis 0,3 Gewichtsteilen eines Neutralisators, bezogen auf 100 Gewichtsteile des Polyethylenharzes.

6. Formgegenstand, der aus der Polyethylenharzzusammensetzung nach einem der Ansprüche 1 bis 5 hergestellt ist.

## Revendications

1. Composition de résine de polyéthylène pour bouchon de bouteille, comprenant 0,01 à 0,4 partie en poids d'un agent de glissement par rapport à 100 parties en poids d'une résine de polyéthylène, dans laquelle l'agent de glissement est un amide d'acide gras insaturé présentant un indice d'acide de 0,01 à 0,1 mg de KOH/g, un indice d'iode de 74 à 80 gI₂/100 g, et une pureté d'amide de 99 à 100 %.

2. Composition de résine de polyéthylène selon la revendication 1, dans laquelle l'amide d'acide gras insaturé a un nombre de carbone de 16 à 25.

3. Composition de résine de polyéthylène selon la revendication 1, dans laquelle la composition de résine de polyéthylène a un indice de fusion compris entre 0,5 et 30 g/10 minutes, tel que mesuré à une température de 190°C et une charge de 2,16 kg selon ASTM D1238.

4. Composition de résine de polyéthylène selon la revendication 1, dans laquelle la composition de résine de polyéthylène a une densité dans la plage de 0,945 à 0,965 g/cm³, telle que mesurée à une température de 23°C selon ASTM D1505.

5. Composition de résine de polyéthylène selon la revendication 1, comprenant en outre au moins un élément choisi dans le groupe comprenant 0,01 à 0,5 partie en poids d'un antioxydant et 0,01 à 0,3 partie en poids d'un neutralisant, par rapport à 100 parties en poids d'une résine de polyéthylène.

6. Article moulé fabriqué à partir de la composition de résine de polyéthylène selon l'une quelconque des revendications 1 à 5.
